# EUROPEAN PATENT APPLICATION

(11) **EP 4 266 086 A1**
(43) Date of publication of application: **25.10.2023**
(21) Application number: 22169482.1
(22) Date of filing: 22.04.2022
(51) Int. Cl.: G01S 17/931, G01S 7/497, G01S 7/481

(54) **LIDAR TEST SYSTEM**

(71) Applicant: Rohde & Schwarz GmbH & Co. KG, 81671 München (DE)
(72) Inventor: Simper, Benedikt, 81671 München (DE); Zahlheimer, Gerald, 81671 München (DE); Hamberger, Gerhard, 81671 München (DE); Marius, Brinkmann, 81671 München (DE)
(74) Representative: Prinz & Partner mbB

(57) **Abstract**

A LiDAR test system (10) for testing a LiDAR device under test (12) is described. The LiDAR test system (10) comprises an optical module (14) and a target simulator module (16). The LiDAR device under test (12) has a predetermined field of view. The optical module (14) is configured to redirect a LiDAR signal emitted by the LiDAR device under test (12) from a predetermined portion (18) of the field of view to the target simulator module (16), wherein the predetermined portion is adaptable. The target simulator module (16) comprises a receiver unit (20), wherein the receiver unit (20) is configured to receive the LiDAR signal redirected by the optical module (14). The target simulator module (16) comprises a manipulation unit (22), wherein the manipulation unit (22) is configured to manipulate the received LiDAR signal, thereby generating a manipulated LiDAR signal. The target simulator module (16) further comprises an emitter unit (24), wherein the emitter unit (24) is configured to emit the manipulated LiDAR signal.

## Description

The invention generally relates to a LiDAR test system for testing a LiDAR device under test.

LiDAR systems such as LiDAR sensors become more and more popular in different applications, particularly in the automotive sector due to autonomous driving, also called self-driving vehicles. Since the LiDAR systems become more and more popular in different technical fields, it is also necessary to validate and compare the different LiDAR systems concerning their respective characteristics.

For example, end-of-line tests may be performed in order to assess and/or compare the performance of the LiDAR systems, wherein a LiDAR target simulator is necessary in order to validate the respective LiDAR system.

Typically, the target simulator simulates a certain target scenario, also called scenery, for validating the LiDAR system to be tested, thereby generating a response signal to the LiDAR system, namely a response signal to a signal outputted by the LiDAR system. Depending on the target scenario applied, at least one target with respective characteristics is simulated, wherein the characteristics are associated with the response signal.

Usually, different types of tests are conducted in order to assess the performance of the LiDAR systems, such as distance calibration and testing, transmit pattern check, laser alignment and power check.

These tests are usually performed separately and require a large space in order to conduct all the tests. Further, expensive hardware is needed in order to perform these tests for the complete field of view of the LiDAR device under test.

Thus, the object of the present invention is to provide a LiDAR test system that allows for a more efficient testing of a LiDAR device under test.

According to the invention, the problem is solved by a LiDAR test system for testing a LiDAR device under test. The LiDAR test system comprises an optical module and a target simulator module. The LiDAR device under test has a predetermined field of view. The optical module is configured to redirect a LiDAR signal emitted by the LiDAR device under test from a predetermined portion of the field of view to the target simulator module, wherein the predetermined portion is adaptable. The target simulator module comprises a receiver unit, wherein the receiver unit is configured to receive the LiDAR signal redirected by the optical module. The target simulator module comprises a manipulation unit, wherein the manipulation unit is configured to manipulate the received LiDAR signal, thereby generating a manipulated LiDAR signal. The target simulator module further comprises an emitter unit, wherein the emitter unit is configured to emit the manipulated LiDAR signal.

The LiDAR test system according to the present invention is based on the idea to evaluate only a predetermined portion of the field of view of the LiDAR device under test at a time. For this purpose, LiDAR signals from the predetermined portion of the field of view are forwarded to the target simulator module by means of the optical module.

Therein and in the following, the term "optical module" is understood to denote an assembly of optical components that are arranged and configured such that the optical module has the described functionality.

For example, the optical module may comprise reflective optical components, such as screens, mirrors, etc. Additionally or alternatively, the optical module may comprise refractive optical components, such as lenses, parabolic mirrors, etc.

The predetermined portion is adaptable, such that different portions of the field of view can be evaluated consecutively, particularly without moving the LiDAR device under test and/or the target simulator module.

It has turned out that the optical module significantly reduces the space and time required for performing the tests, as different portions of the field of view of the LiDAR device under test can be evaluated without moving the LiDAR device under test and/or the target simulator module. Instead, the individual predetermined portions of the field of view are redirected consecutively by means of the optical module.

Accordingly, the complete field of view of the LiDAR device under test can be tested by means of the LiDAR test system according to the present disclosure, but with a significantly reduced space requirement and time requirement for performing the tests.

Further, it has turned out that more cost-efficient hardware components can be used in the backend of the target simulator module. As only the predetermined portion of the field of field of view has to be evaluated at a time, hardware components with a reduced resolution can be used, which are less expensive than hardware components with higher resolution.

Moreover, as only the predetermined portion of the field of field of view has to be evaluated at a time, hardware components that only have the capability or rather processing power for handling a single LiDAR signal or few LiDAR signals at a time can be used, which are which are less expensive than hardware components that are capable of processing a larger number of LiDAR signals simultaneously.

In an embodiment of the present invention, the manipulation unit is configured to delay the LiDAR signal, amplify the LiDAR signal, attenuate the LiDAR signal, modulate the LiDAR signal, and/or adapt a frequency of the LiDAR signal, particularly such that a target scenario is simulated appropriately. Thus, the manipulated LiDAR signal corresponds to the LiDAR signal that one or several targets hit by the LiDAR signal emitted by the LiDAR device under test would reflect back to the LiDAR device under test.

Alternatively or additionally, the manipulation unit is configured to delay the LiDAR signal, amplify the LiDAR signal, attenuate the LiDAR signal, modulate the LiDAR signal, adapt a frequency of the LiDAR signal, and/or add an additional signal to the LiDAR signal, such that a stray light source is simulated appropriately. In other words, the manipulated LiDAR signal may comprise a signal portion that corresponds to simulated stray light. Thus, the resilience of the LiDAR device under test with respect to stray light can be tested appropriately.

The simulated stray light may be uncorrelated with the remaining portion of the manipulated LiDAR signal.

Thus, the manipulation unit may comprise a delay line, an amplifier, an attenuator, a mixer, a coupler for adding another optical or electrical signal, a power splitter, and/or a detector.

According to an aspect of the present invention, the optical module is configured to scan the field of view, such that LiDAR signals from different portions of the field of view are redirected to the target simulator module consecutively. In other words, the optical module may be configured to adapt the predetermined portion of the field of view according to a scanning pattern. Thus, different predetermined portions of the field of view are evaluated consecutively according to the scanning pattern.

According to a further aspect of the present invention, a scanning pattern of the optical module is synchronized with a scanning pattern of the LiDAR device under test. In fact, the scanning pattern of the optical module may be synchronized with the scanning pattern of the LiDAR device under test, such that only portions of the total field of view of the LiDAR device under test that currently have an active LiDAR signal are evaluated by means optical module and the target simulator module.

In an embodiment of the present invention, the optical module is configured to redirect the manipulated LiDAR signal to the LiDAR device under test.

In fact, the same optical components may be used for transmitting the LiDAR signal(s) to the target simulator module and for transmitting the manipulated LiDAR signal(s) to the LiDAR device under test. This variant is particularly suitable for LiDAR devices under test having coaxial transmitter (TX) and receiver (RX) paths.

Alternatively, the optical module may comprise dedicated components for transmitting the LiDAR signal(s) from the LiDAR device under test to the target simulator module, and dedicated components for transmitting the manipulated LiDAR signal(s) from the target simulator module to the LiDAR device under test. This variant is particularly suitable for LiDAR devices under test having TX and RX paths that are spaced from each other.

The optical components of the optical module associated with the TX path of the LiDAR device under test may be functionally identical to the optical components of the optical module associated with the RX path of the LiDAR device under test.

Alternatively, the optical components of the optical module associated with the TX path of the LiDAR device under test may be functionally different from the optical components of the optical module associated with the RX path of the LiDAR device under test.

In a further embodiment of the present invention, the optical module comprises a scanning mirror, particularly a 2D galvanometer scanner and/or a digital micromirror device. In general, the scanning mirror is configured to adapt the predetermined portion of the field of view. In other words, the predetermined portion of the field of view can be set by adjusting an orientation of the scanning mirror and/or by other settings of the scanning mirror.

In the case of the scanning mirror being established as a 2D galvanometer scanner, the orientation of the scanning mirror (and thus the predetermined portion of the field of view) is adjustable.

In the case of the scanning mirror being established as a digital micromirror device, the scanning mirror may comprise a plurality of micromirrors that can be activated and deactivated individually, and/or a plurality of micromirror arrays that can be activated and deactivated individually.

Each micromirror or each micromirror array may be associated with a certain portion of the FOV of the LiDAR device under test. If a micromirror or micromirror array is active, LiDAR signals from the associated predetermined portion of the field of view are transmitted to the target simulator module. Thus, the predetermined portion of the field of view of the LiDAR device under test can be adapted by selectively activating and deactivating the micromirrors and/or micromirror arrays.

The optical module may comprise a screen being configured to reflect the LiDAR signal. Alternatively or additionally, the optical module may comprise at least one optical component being configured to reflect and/or refract the LiDAR signal.

Thus, the LiDAR signal(s) emitted by the LiDAR device under test may be reflected by the screen. The optical module may redirect the LiDAR signal(s) from a portion of the screen corresponding to the predetermined portion of the field of view to the target simulator module.

The at least one optical component may comprise at least one of a parabolic mirror, a beam splitter unit, a mirror, a lens, or any other suitable optical component.

According to an aspect of the present invention, the predetermined portion of the field of view is smaller than the field of view, particularly wherein the predetermined portion of the field of view is equal to or smaller than 50% of the field of view, in particular smaller than or equal to 25% of the field of view, for example equal to or smaller than 10% of the field of view. In general, a smaller size of the predetermined portion of the field of view reduces the requirements on the hardware of the target simulator module, as already described above.

Particularly, the optical module may be configured to adapt the size of the predetermined portion of the field of view. Thus, the size of the predetermined portion can be adapted for different requirements, ranging from a fast execution of the tests to a high measurement accuracy.

For example, the optical module may comprise a zoom lens that is provided upstream or downstream of the scanning mirror, particularly immediately downstream of the scanning mirror. The zoom lens may be configured to adapt the size of the predetermined portion of the field of view.

In an embodiment of the present invention, the LiDAR test system comprises a control module, wherein the control module is configured to control the optical module, the target simulator module, and/or the LiDAR device under test.

The control module may be configured to control the optical module to adapt the predetermined portion of the field of view. Particularly, the control module may be configured to synchronize the scanning pattern of the optical module with the scanning pattern of the LiDAR device under test.

Alternatively or additionally, the control module may be configured to control the target simulator module to simulate a particular target scenario for the LiDAR device under test. The target scenario may comprise one or more targets for the LiDAR device under test, e.g. one or several objects.

Alternatively or additionally, the control module may be configured to control the target simulator module to simulate a particular stray light source.

Alternatively or additionally, the control module may be configured to control the LiDAR device under test to start and/or stop generating LiDAR signals.

According to another aspect of the present invention, the receiver unit comprises an optical-to-electrical converter. Alternatively or additionally, the emitter unit comprises an electrical-to-optical converter. Thus, the target simulator module may process and manipulate the received LiDAR signal(s) in the electrical domain or in the optical domain.

Accordingly, the manipulation unit may comprise electronic circuitry that is configured to amplify an electric signal corresponding to the received LiDAR signal(s), attenuate the electric signal, modulate the electric signal, add an additional electric signal, and/or adapt a frequency of the electric signal, such that the target scenario and/or the stray light source are/is simulated appropriately.

Alternatively, the manipulation unit may comprise optical components that are configured to amplify the received LiDAR signal(s), attenuate the received LiDAR signal(s), modulate the received LiDAR signal(s), add an additional optical signal, and/or adapt a frequency of the received LiDAR signal(s), such that the target scenario and/or the stray light source are/is simulated appropriately.

Particularly, the emitter unit comprises a laser diode, wherein the laser diode is configured to emit the manipulated LiDAR signal. However, it is to be understood that any other suitable light source may be used in order to emit the manipulated LiDAR signal(s).

According to an aspect of the present invention, the optical module is configured to redirect at least two LiDAR signals emitted by the LiDAR device under test from the predetermined portion of the field of view to the target simulator module simultaneously, wherein the target simulator module is configured to manipulate the at least two received LiDAR signals, thereby generating at least two manipulated LiDAR signals, and wherein the target simulator module is configured to emit the at least two manipulated LiDAR signals. Accordingly, two or more LiDAR signals emitted by the LiDAR device under test can be evaluated and manipulated at the same time, as long as the at least two LiDAR signals both are within the predetermined portion of the field of view.

The at least two received LiDAR signals could be manipulated in the same way or in different ways.

The target simulator module may comprise at least two receiver units that are configured to receive the at least two LiDAR signals. Alternatively, the target simulator module may comprise a single receiver unit that is configured to receive the at least two LiDAR signals.

The target simulator module may comprise at least two manipulation units that are configured to manipulate the at least two received LiDAR signals, thereby generating the at least two manipulated LiDAR signals corresponding to the at least two LiDAR signals received. Alternatively, the target simulator module may comprise a single manipulation unit that is configured to manipulate the at least two LiDAR signals.

The target simulator module may comprise at least two emitter units that are configured to emit the at least two manipulated LiDAR signals. Alternatively, the target simulator module may comprise a single emitter unit that is configured to emit the at least two manipulated LiDAR signals.

According to another aspect of the present invention, the LiDAR test system comprises a sensor array, wherein the optical module is configured to partially redirect the LiDAR signal emitted by the LiDAR device under test to the sensor array, particularly wherein the sensor array is configured to determine a scanning pattern of the LiDAR device under test, a beam shape of the LiDAR signal emitted by the LiDAR device under test, and/or a pulse shape of LiDAR signal emitted by the LiDAR device under test. Additional aspects of the performance of the LiDAR device under test can be evaluated by means of the sensor array, e.g. a scanning pattern, a shape of the light beam(s) or light pulses emitted by the LiDAR device under test, a power of LiDAR signals emitted into the predetermined portion of the field of view, etc.

In general, the portion of the LiDAR signal redirected to the sensor array may not be transmitted back to the LiDAR device under test.

The sensor array and the target simulator module may be integrated into a single processing device. Alternatively, the sensor array and the target simulator module may be established as separate devices.

For example, the sensor array may be established as a single-photon-avalanche-diode (SPAD) array, as an avalanche photodiode (APD) array, or as a silicon photomultiplier (SiPM) array. SPAD arrays, APD arrays, and SiPM arrays are available in a multitude of different types having different specifications. Thus, the appropriate SPAD array, APD array, or SiPM array for testing a particular LiDAR device under test usually is readily available on the market.

In an embodiment of the present invention, the optical module is configured to redirect the LiDAR signal to the sensor array from the whole field of view of the LiDAR device under test, from the field of view of the LiDAR device under test outside of the predetermined portion of the field of view, or from the predetermined portion of the field of view. Thus, different aspect of the performance of the LiDAR device under test may be evaluated by means of the sensor array, for example a power of LiDAR signals emitted into the predetermined portion of the field of view, a power of LiDAR signals emitted into the complete field of view, and/or a power of LiDAR signals emitted into the field of view of the LiDAR device under test outside of the predetermined portion of the field of view.

In a further embodiment of the present disclosure, the optical module comprises an optical splitter unit, wherein the optical splitter unit is configured to split the LiDAR signal into a first LiDAR signal and a second LiDAR signal, wherein the first LiDAR signal is redirected to the target simulator module, and wherein the second LiDAR signal is redirected to the sensor array. In other words, the optical splitter unit is configured to split up the LiDAR signal(s) received from the LiDAR device under test, such that the same LiDAR signal is forwarded to the target simulator module and to the sensor array, albeit with reduced intensity.

The optical module and/or the target simulator module may be stationary.

In fact, the LiDAR device under test may be stationary, i.e. the performance of the LiDAR device under test can be assessed by means of the LiDAR test system without moving the LiDAR device under test.

In other words, instead of moving the optical module, the target simulator module and/or the LiDAR device under test, the complete field of view of the LiDAR device under test can be evaluated consecutively by adapting the predetermined portion of the field of view, as described above. Thus, assessing the performance of the device under test is simplified, as the optical module, the target simulator module and/or the LiDAR device under test can remain stationary during the whole test procedure.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a LiDAR test system according to a first embodiment of the present invention;
- Figure 2 schematically shows a LiDAR test system according to a second embodiment of the present invention;
- Figure 3 schematically shows a LiDAR test system according to a third embodiment of the present invention;
- Figure 4 schematically shows a LiDAR test system according to a fourth embodiment of the present invention;
- Figure 5 schematically shows a LiDAR test system according to a fifth embodiment of the present invention;
- Figure 6 schematically shows a LiDAR test system according to a sixth embodiment of the present invention;
- Figure 7 schematically shows a LiDAR test system according to a seventh embodiment of the present invention; and
- Figure 8 schematically shows a LiDAR test system according to an eighth embodiment of the present invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

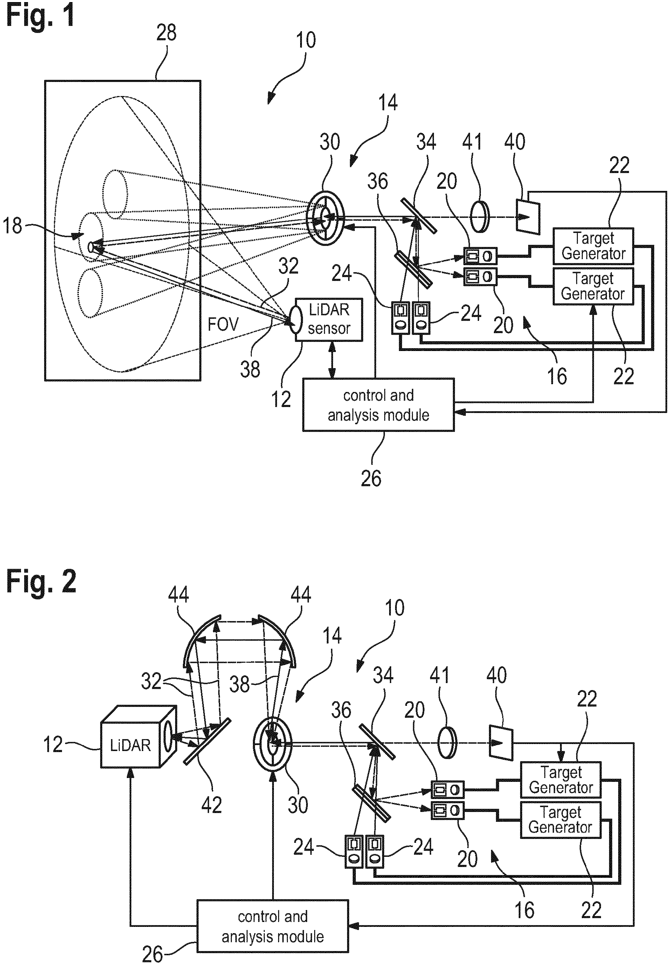

Figure 1 schematically shows a LiDAR test system 10 comprising a LiDAR device under test 12, an optical module 14, and a target simulator module 16.

In general, the LiDAR test system 10 is configured to test certain aspects of the performance of the LiDAR device under test 12.

For example, the LiDAR device under test 12 may be a LiDAR sensor, particularly an automotive LiDAR sensor that is used in conjunction with one or several driving assistance systems of a vehicle.

The LiDAR device under test 12 scans a field of view (FOV) of the LiDAR device under test 12 by consecutively generating several LiDAR signals. Alternatively or additionally, the LiDAR device under test 12 may scan its FOV by generating a plurality of LiDAR signals simultaneously.

The LiDAR signal(s) may be established as a continuous beam or as a pulsed signal, respectively.

The optical module 14 is configured to redirect the LiDAR signal(s) emitted by the LiDAR device under test 12 from a predetermined portion 18 of the FOV to the target simulator module 16.

Therein and in the following, the term "optical module" is understood to denote an assembly of optical components that are arranged such that the optical module 14 has the described functionality.

For example, the optical module 14 may comprise reflective optical components, such as screens, mirrors, etc. Additionally or alternatively, the optical module 14 may comprise refractive optical components, such as lenses, parabolic mirrors, etc.

The predetermined portion 18 is smaller than the total FOV of the LiDAR device under test 12.

The predetermined portion of the FOV may be equal to or smaller than 50% of the FOV, particularly smaller than or equal to 25% of the FOV, for example equal to or smaller than 10% of the FOV.

In fact, the predetermined portion 18 of the FOV is adaptable, i.e. the optical module 14 is configured to adapt the position of the predetermined portion 18. Optionally, the optical module 14 may be configured to adapt the size of the predetermined portion 18.

For example, the optical module 14 is configured to move the predetermined portion 18 of the FOV within the (whole) FOV of the LiDAR device under test 12, so that for each position of the predetermined portion 18 of the FOV another part of the (whole) FOV of the LiDAR device under test 12 is processed by the target simulator module 16. This could be done until each part of the (whole) FOV of the LiDAR device under test 12 was once fed to the target simulator module 16.

Particularly, the optical module 14 is configured to scan the FOV of the LiDAR device under test 12, such that LiDAR signals from different portions of the FOV are redirected to the target simulator module 16 consecutively.

Thus, the complete FOV of the LiDAR device under test 12 may be evaluated consecutively.

In fact, a scanning pattern of the optical module 14 may be synchronized with a scanning pattern of the LiDAR device under test 12, such that only portions of the total FOV of the LiDAR device under test 12 that currently have an active LiDAR signal are evaluated by means optical module 14 and the target simulator module 16.

The target simulator module 16 comprises a receiver unit 20, wherein the receiver unit 20 is configured to receive the LiDAR signal redirected by the optical module 14.

The target simulator module 16 further comprises a manipulation unit 22, wherein the manipulation unit 22 is configured to manipulate the received LiDAR signal(s), thereby generating a manipulated LiDAR signal or a plurality of manipulated LiDAR signals.

Therein the manipulated LiDAR signal(s) corresponds to the LiDAR signal(s) that one or several targets hit by the LiDAR signal emitted by the LiDAR device under test 12 would reflect back to the LiDAR device under test 12.

More precisely, the manipulation unit 22 may delay the LiDAR signal(s), amplify the LiDAR signal(s), attenuate the LiDAR signal(s), modulate the LiDAR signal(s), and/or adapt a frequency of the LiDAR signal(s), such that the at least one target is simulated appropriately.

Alternatively or additionally, the manipulation unit 22 may be configured to delay the LiDAR signal(s), amplify the LiDAR signal(s), attenuate the LiDAR signal(s), modulate the LiDAR signal(s), adapt a frequency of the LiDAR signal(s), and/or add at least one additional signal to the LiDAR signal(s), such that at least one stray light source is simulated appropriately. In other words, the manipulated LiDAR signal may comprise a signal portion that corresponds to simulated stray light.

The target simulator module 16 further comprises an emitter unit 24, wherein the emitter unit 24 is configured to emit the manipulated LiDAR signal.

The optical module 14 is further configured to redirect the manipulated LiDAR signal(s) back to the LiDAR device under test 12, such that the LiDAR device under test 12 receives the manipulated LiDAR signal(s).

The LiDAR device under test 12 evaluates the manipulated LiDAR signal(s) and generates corresponding measurement signals.

The performance of the LiDAR device under test 12 may be evaluated based on the measurement signals generated by the LiDAR device under test 12 by means of any suitable technique known in the art.

Particularly, the test system 10 may comprise a control and analysis module 26 that is connected to the LiDAR device under test 12, the optical module 14, and/or the target simulator module 16 in a signal-transmitting manner.

Therein and in the following, the term "connected in a signal-transmitting manner" is understood to denote a cable-based or wireless connection that is configured to transmit signals between the respective devices or components.

The control and analysis module 26 may be configured to analyze the measurement signals generated by the LiDAR device under test 12 in order to assess the performance of the LiDAR device under test 12.

Alternatively or additionally, the control and analysis module 26 may be configured to control the optical module 14 to adapt the predetermined portion 18. Particularly, the control and analysis module 26 may be configured to synchronize the scanning pattern of the optical module 14 with the scanning pattern of the LiDAR device under test 12.

Alternatively or additionally, the control and analysis module 26 may be configured to control the target simulator module 16 to simulate a particular target scenario for the LiDAR device under test 12.

Alternatively or additionally, the control and analysis module 26 may be configured to control the target simulator module 16 to simulate at least one particular stray light source.

Alternatively or additionally, the control and analysis module 26 may be configured to control the LiDAR device under test 12 to start and/or stop generating LiDAR signals.

While the explanations given above apply to all embodiments of the LiDAR test system 10, the optical module 14 and the target simulator module 16 can be established according to a plurality of different embodiments. Different embodiments of the optical module 14 can be combined with different embodiments of the target simulator module 16.

Accordingly, while certain embodiments of the optical module 14 are explained in the following in conjunction with certain embodiments of the target simulator module 16, it is emphasized that these can be combined arbitrarily.

In the first exemplary embodiment shown in Figure 1, the optical module 14 comprises a screen 28 that is positioned in a part of the FOV or in the full FOV of the LiDAR device under test 12.

The optical module 14 further comprises a scanning mirror 30 that is configured to redirect a LiDAR signal 32 emitted by the LiDAR device under test 12 from the predetermined portion 18 of the FOV to an optical splitter unit 34.

For example, the scanning mirror 30 may be established as a 2D galvanometer scanner.

The splitter unit 34 may be a semi-reflective mirror that allows a portion of the LiDAR signal to pass and reflects the remaining portion of the LiDAR signal to a semi-transparent unit 36.

Optionally, a zoom lens may be arranged between the scanning mirror and the splitter unit 34. The zoom lens may be configured to adapt the size of the predetermined portion 18 of the FOV.

The semi-transparent unit 36 is configured to reflect the LiDAR signals received from the splitter unit 34 to the receiver unit 20.

Further, the semi-transparent unit 36 is configured to let the manipulated LiDAR signal 38 emitted by the emitter unit 24 pass to the splitter unit 34, such that the manipulated LiDAR signal 38 is appropriately transmitted back to the LiDAR device under test 12 via the scanning mirror 30 and the screen 28.

In the embodiment shown in Figure 1, the LiDAR test system 10 further comprises a sensor array 40, wherein the sensor array 40 is arranged such that the portion of the LiDAR signal passing the splitter unit 34 impinges onto the sensor array 40.

Optionally, a lens 41 may be provided between the splitter unit 34 and the sensor array 40. Particularly, the lens 41 may be established as a zoom lens.

For example, the sensor array 40 may be established as a single-photon-avalanche-diode (SPAD) array, as an avalanche photodiode (APD) array, or as a silicon photomultiplier (SiPM) array.

The sensor array 40 may be connected to the control and analysis module 26 and may be used in order to detect or rather test a scanning pattern of the LiDAR device under test 12, in order to evaluate a beam shape of the LiDAR signal(s) emitted by the LiDAR device under test 12, in order to evaluate a pulse shape of the LiDAR signal(s) emitted by the LiDAR device under test 12, and/or in order to determine a power of the LiDAR signal(s) emitted by the LiDAR device under test 12.

Alternatively or additionally, other properties of the received LiDAR signal(s) may be determined by means of the sensor array 40. For example, the intensity of the received LiDAR signal(s) over time, the diameter of the received LiDAR signal(s), and/or the shape (e.g. elliptic or circular) of the received LiDAR signal(s) may be determined.

Alternatively or additionally, the sensor array 40 may be configured to determine how many LiDAR signal(s) have arrived in a specific period of time or at the same time.

Alternatively or additionally, the test system 10 may comprise a camera that is configured to capture images of the screen 28. The pattern detection may then be performed based on the images captured by means of the camera.

In the exemplary embodiment shown in Figure 1, the receiver unit 20 of the target simulator module 16 is established as a pair of optical-to-electrical converters that are configured to convert the received LiDAR signal(s) into a corresponding electric signal.

Accordingly, the manipulation unit 22 comprises electronic circuitry that is configured to amplify the electric signal, attenuate the electric signal, modulate the electric signal, add an additional electric signal, and/or adapt a frequency of the electric signal, such that the target scenario and/or the stray light source(s) are/is simulated appropriately.

The resulting manipulated electric signal is forwarded to the emitter unit 24.

The emitter unit 24 comprises a pair of electrical-to-optical converters that are configured to convert the manipulated electric signal into a corresponding manipulated LiDAR signal.

For example, the emitter unit 24 may comprise one or several laser diodes that are configured to convert the manipulated electric signal into a corresponding manipulated LiDAR signal.

However, it is to be understood that the manipulated LiDAR signal may be generated by any other suitable technique known in the art.

Particularly, the receiver unit 20, the manipulation unit 22, and the emitter unit 24 may operate in the optical domain, i.e. without converting the received LiDAR signal(s) into a corresponding electric signal.

For example, the receiver unit 20 may be configured to couple the received LiDAR signal(s) into a fiber optical delay line. The manipulation unit 22 may manipulate the received LiDAR signal(s) in the optical domain. The emitter unit 24 may emit the manipulated LiDAR signal(s).

The fiber optical delay line might be longer than 5 m, 10 m, 15 m, 20 m, 25 m, 30 m, 35 m, 40 m, 45 m, 50 m, 55 m, 60, 70 m, 80 m, 90 m, 100 m, 110 m, 120 m, 130 m, 140 m, 150 m, 160 m, 170 m, 180 m, 190 m, or longer than 200 m.

In addition or alternatively, the fiber optical delay line might be shorter than 205 m, 195 m, 185 m, 175 m, 165 m, 150 m, 145 m, 135 m, 125 m, 115 m, 105 m, 95 m, 85 m, 75 m, 65 m, 55 m, 45 m, 35 m, 25 m, 15 m, or shorter than 10 m.

The fiber optical delay line could preferably be wound up around a cylinder for example. The fiber optical delay line could be exchangeable in a tool free manner to another fiber optical delay line with a different length.

Figure 2 shows a further variant of the test system 10, wherein only the differences compared to the first variant described above are explained in the following.

Instead of the screen 28 described above, the optical module 14 comprises a reflective unit 42 and two parabolic mirrors 44.

The LiDAR signal 32 is emitted towards the reflective unit 42 and from the reflective unit 42 towards a first parabolic mirror 44 and from the first parabolic mirror 44 towards the second parabolic mirror 44 and from the second parabolic mirror 44 towards the optical module 14.

The manipulated LiDAR signal 38 is reflected via the same optical module 14 and the same parabolic mirrors 44 and the same (optional) reflective unit 42 back towards the LiDAR device under test 12.

The reflective unit 42 may be located in near-field region of the LiDAR device under test 12. However, the use of a reflective unit 42 is optional. The LiDAR device under test 12 could also emit the LiDAR signal 32 directly to the first of the two parabolic mirrors 44.

The parabolic mirrors 44 are arranged and configured such that the complete FOV of the LiDAR device under test 12 can be captured consecutively by means of the scanning mirror 30, i.e. forwarded to the target simulator module 16 as described above.

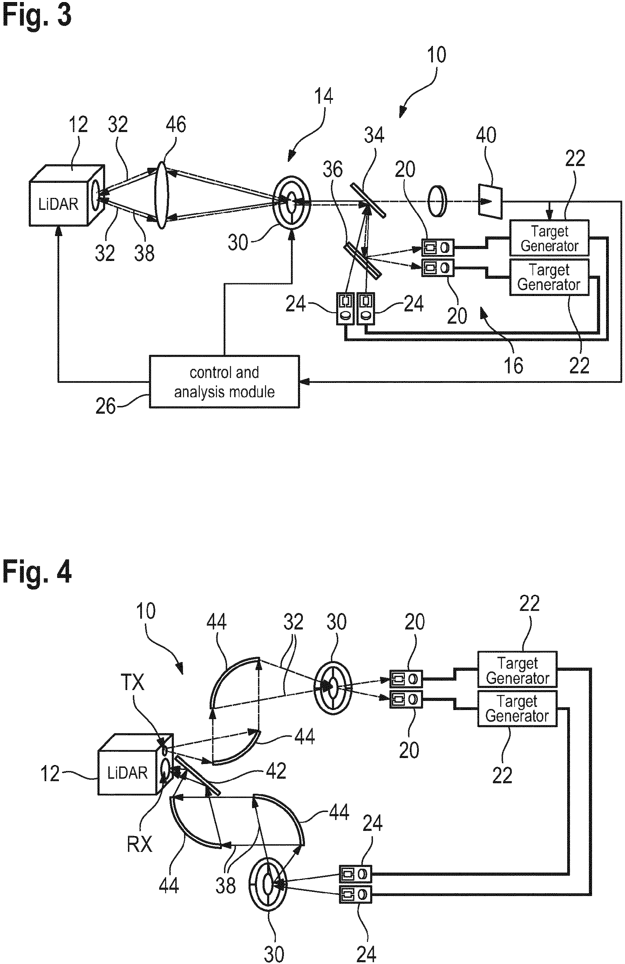

Figure 3 shows a further variant of the test system 10, wherein only the differences compared to the first variant described above are explained in the following.

Instead of the screen 28 described above, the optical module 14 comprises a refractive unit 46 that is interconnected between the LiDAR device under test 12 and the scanning mirror 30.

The refractive unit 46 may be established as a lens, particularly as a converging lens.

The refractive unit 46 may be located in near-field region of the LiDAR device under test 12.

The refractive unit 46 and the scanning mirror 30 are arranged and configured such that the complete FOV of the LiDAR device under test 12 can be captured consecutively by means of the scanning mirror 30, i.e. forwarded to the target simulator module 16 as described above.

In the embodiments of the optical module 14 described above, the same optical components are used for transmitting the LiDAR signal(s) 32 to the target simulator module 16 and for transmitting the manipulated LiDAR signals 38 to the LiDAR device under test 12.

The variants of the test system 10 described above are particularly suitable for LiDAR devices under test 12 having coaxial transmitter (TX) and receiver (RX) paths.

However, as is shown in Figure 4, the TX path and the RX path of the LIDAR device under test 12 may be spaced from each other by a certain distance depending on the type of the LiDAR device under test 12.

In this case, the test system 10 or rather the optical module 14 may comprise dedicated components for transmitting the LiDAR signal(s) 32 from the LiDAR device under test 12 to the target simulator module 16.

The test system 10 or rather the optical module 14 may further comprise dedicated components for transmitting the manipulated LiDAR signal(s) 38 from the target simulator module 16 to the LiDAR device under test 12.

In the exemplary embodiment shown in Figure 4, the manipulated LiDAR signal(s) is (are) transmitted to the LiDAR device under test 12 via a scanning mirror 30, two parabolic mirrors 44, and a reflective unit 42.

However, it is to be understood that any other suitable combination of optical components may be used in the optical module 14, particularly the optical components described above.

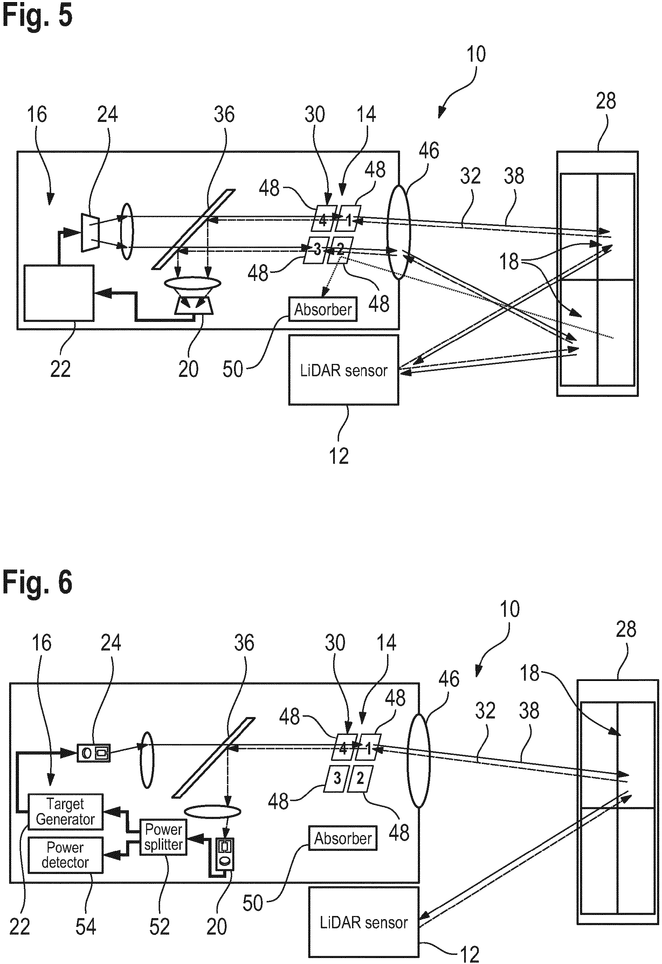

Figure 5 shows a further variant of the test system 10, wherein only the differences compared to the variants described above are explained in the following.

In the exemplary embodiment shown in Figure 5, the scanning mirror 30 is established as a digital micromirror device (DMD).

The digital micromirror device comprises a plurality of micromirrors or micromirror arrays 48 that can be activated and deactivated individually.

Each micromirror or micromirror array 48 is associated with a certain portion 18 of the FOV of the LiDAR device under test 12.

In other words, each micromirror or micromirror array 48 is associated with a portion of the screen 28 corresponding to a predetermined portion 18 of the FOV of the LiDAR device under test.

More precisely, the refractive unit 46 as well the micromirrors or micromirror arrays 48 are arranged and configured such that light emitted or rather reflected by the screen 28 is forwarded to the respective micromirror arrays associated with the respective portions of the screen 28.Particularly, each micromirror array 48 may comprise a plurality of micromirrors, wherein each micromirror is associated with a pixel on the screen 28.

If a micromirror or micromirror array 48 is active, LiDAR signals from the associated predetermined portion 18 of the FOV are transmitted to the target simulator module 16.

If a micromirror or micromirror array 48 is inactive, light received from the associated portion of the screen 28 is not transmitted to the target simulator module 16.

Instead, light received from portions of the screen 28 that are associated with inactive micromirrors or micromirror arrays 48 may be transmitted to an absorber 50 that is configured to absorb the received light.

Thus, the predetermined portion 18 of the FOV of the LiDAR device under test 12 can be adapted by selectively activating and deactivating the micromirrors or micromirror arrays 48.

For example, the control and analysis module 26 (not shown in Figure 5) may be configured to selectively activate and deactivate the micromirrors or micromirror arrays 48.

Figure 6 shows a further variant of the test system 10, wherein only the differences compared to the variant described above with respect to Figure 5 are explained in the following.

The target simulator module 16 further comprises a power splitter unit 52 and a power detector 54.

The power splitter unit 52 is configured to forward the LiDAR signal(s) received by means of the receiver unit 20 to the manipulation unit 22 and to the power detector 54.

The power detector 54 is configured to determine a power of the received LiDAR signals. Thus, the power of the LiDAR signal(s) associated with the predetermined portion 18 of the FOV of the LiDAR device under test 12 can be evaluated by means of the power detector 54.

Optionally, the power determined by means of the power detector 54 may be corrected for the reflectivity of the screen 28, such that the determined power correctly resembles the actual power of the emitted LiDAR signals.

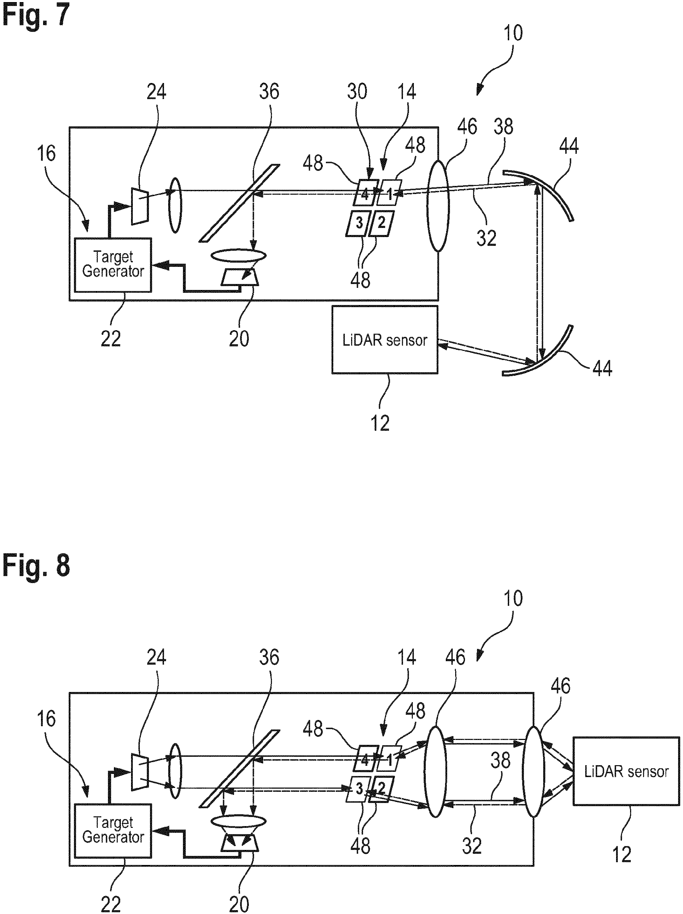

Figure 7 shows a further variant of the test system 10, wherein only the differences compared to the variants described above with respect to Figures 5 and 6 are explained in the following.

Instead of the screen 28 described above, the optical module 14 comprises two off-axis parabolic mirrors 44.

The parabolic mirrors 44 are arranged and configured such that the complete FOV of the LiDAR device under test 12 can be captured consecutively by means of the scanning mirror 30, i.e. forwarded to the target simulator module 16 as described above.

Figure 8 shows a further variant of the test system 10, wherein only the differences compared to the variants described above with respect to Figures 5 and 6 are explained in the following.

Instead of the screen 28 described above, the optical module 14 comprises a further refractive unit 46 that is interconnected between the LiDAR device under test 12 and the scanning mirror 30.

The refractive unit 46 may be established as a lens, particularly as a converging lens.

The refractive unit 46 may be located in near-field region of the LiDAR device under test 12.

The refractive unit 46 and the scanning mirror 30 are arranged and configured such that the complete FOV of the LiDAR device under test 12 can be captured consecutively by means of the scanning mirror 30, i.e. forwarded to the target simulator module 16 as described above.

Summarizing, a plurality of different measurements of properties of the LiDAR device under test 12 can be performed by means of the test system 10.

Particularly, a transmit pattern check, a uniformity check, a FOV area check, a resolution check, an alignment check, a sensor range check, a calibration check, a range test, and/or a calibration of the LiDAR device under test 12 may be performed by means of the test system 10 described above.

As only the predetermined portion 18 of the FOV is evaluated at a time, the hardware requirements on the target simulator module 16 and the other measurement components is reduced, such that rather inexpensive components can be used, particularly "off-the-shelve" components.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A LiDAR test system for testing a LiDAR device under test (12), comprising an optical module (14) and a target simulator module (16),
wherein the LiDAR device under test (12) has a predetermined field of view,
wherein the optical module (14) is configured to redirect a LiDAR signal emitted by the LiDAR device under test (12) from a predetermined portion (18) of the field of view to the target simulator module (16), wherein the predetermined portion (18) is adaptable,
wherein the target simulator module (16) comprises a receiver unit (20), wherein the receiver unit (20) is configured to receive the LiDAR signal redirected by the optical module (14),
wherein the target simulator module (16) comprises a manipulation unit (22), wherein the manipulation unit (22) is configured to manipulate the received LiDAR signal, thereby generating a manipulated LiDAR signal, and
wherein the target simulator module (16) further comprises an emitter unit (24), wherein the emitter unit (24) is configured to emit the manipulated LiDAR signal.

2. The LiDAR test system according to claim 1, wherein the optical module (14) is configured to scan the field of view, such that LiDAR signals from different portions of the field of view are redirected to the target simulator module (16) consecutively.

3. The LiDAR test system according to claim 2, wherein a scanning pattern of the optical module (14) is synchronized with a scanning pattern of the LiDAR device under test (12).

4. The LiDAR test system according to any one of the preceding claims, wherein the optical module (14) is configured to redirect the manipulated LiDAR signal to the LiDAR device under test (12).

5. The LiDAR test system according to any one of the preceding claims, wherein the optical module (14) comprises a scanning mirror (30), particularly a 2D galvanometer scanner and/or a digital micromirror device.

6. The LiDAR test system according to any one of the preceding claims, wherein the optical module (14) comprises a screen (28) being configured to reflect the LiDAR signal and/or at least one optical component being configured to reflect and/or refract the LiDAR signal.

7. The LiDAR test system according to any one of the preceding claims, wherein the predetermined portion (18) of the field of view is smaller than the field of view, particularly wherein the predetermined portion (18) of the field of view is equal to or smaller than 50% of the field of view, in particular smaller than or equal to 25% of the field of view, for example equal to or smaller than 10% of the field of view.

8. The LiDAR test system according to any one of the preceding claims, wherein the LiDAR test system (10) comprises a control module (26), wherein the control module (26) is configured to control the optical module (14), the target simulator module (16), and/or the LiDAR device under test (12).

9. The LiDAR test system according to any one of the preceding claims, wherein the receiver unit (20) comprises an optical-to-electrical converter, and/or wherein the emitter unit (24) comprises an electrical-to-optical converter.

10. The LiDAR test system according to any one of the preceding claims, wherein the emitter unit (24) comprises a laser diode, wherein the laser diode is configured to emit the manipulated LiDAR signal.

11. The LiDAR test system according to any one of the preceding claims, wherein the optical module (14) is configured to redirect at least two LiDAR signals emitted by the LiDAR device under test (12) from the predetermined portion (18) of the field of view to the target simulator module (16) simultaneously,
wherein the target simulator module (16) is configured to manipulate the at least two received LiDAR signals, thereby generating at least two manipulated LiDAR signals, and
wherein the target simulator module (16) is configured to emit the at least two manipulated LiDAR signals.

12. The LiDAR test system according to any one of the preceding claims, wherein the LiDAR test system (10) comprises a sensor array (40), wherein the optical module (14) is configured to partially redirect the LiDAR signal emitted by the LiDAR device under test (12) to the sensory array (40), particularly wherein the sensor array (40) is configured to determine a scanning pattern of the LiDAR device under test (12), a beam shape of the LiDAR signal emitted by LiDAR device under test (12), and/or a pulse shape of the LiDAR signal emitted by the LiDAR device under test (12).

13. The LiDAR test system of claim 12, wherein the optical module (14) is configured to redirect the LiDAR signal to the sensor array (40) from the whole field of view of the LiDAR device under test (12), from the field of view of the LiDAR device under test (12) outside of the predetermined portion (18) of the field of view, or from the predetermined portion (18) of the field of view.

14. The LiDAR test system according to any one of claims 12 and 13, wherein the optical module (14) comprises an optical splitter unit (34), wherein the optical splitter unit (34) is configured to split the LiDAR signal into a first LiDAR signal and a second LiDAR signal, wherein the first LiDAR signal is redirected to the target simulator module (16), and wherein the second LiDAR signal is redirected to the sensor array (40).

15. The LiDAR test system according to any one of the preceding claims, wherein the optical module (14) and/or the target simulator module (16) are stationary.
